# EUROPEAN PATENT SPECIFICATION

(11) **EP 3 343 117 B1**
(45) Date of publication and mention of the grant of the patent: **04.09.2019**
(21) Application number: 16851406.5
(22) Date of filing: 26.09.2016
(51) Int. Cl.: F24F 3/14, F24F 12/00

(54) **DEHUMIDIFYING METHOD AND DEHUMIDIFYING DEVICE**
ENTFEUCHTUNGSVERFAHREN UND ENTFEUCHTUNGSVORRICHTUNG
PROCÉDÉ DE DÉSHUMIDIFICATION ET DISPOSITIF DE DÉSHUMIDIFICATION

(30) Priority: 30.09.2015 JP 2015193739
(43) Date of publication of application: 04.07.2018
(73) Proprietor: Mayekawa Mfg. Co., Ltd., Koto-ku Tokyo 135-8482 (JP)
(72) Inventor: KOMATSU, Fujio, Tokyo 135-8482 (JP); YAMAGUCHI, Masahiro, Osaka-shi Osaka 530-0054 (JP)
(74) Representative: Regimbeau
(86) International application number: PCT/JP2016/078185
(87) International publication number: WO 2017/057235

(56) References cited:
- EP-A2- 2 413 049
- JP-A- 2001 263 764
- JP-A- 2004 278 943
- JP-A- 2006 308 236
- JP-A- 2007 024 467
- JP-A- 2012 117 683
- JP-A- 2012 167 843
- JP-A- 2012 525 954
- JP-A- 2013 210 129
- US-A- 5 448 895
- US-A1- 2004 134 211
- US-A1- 2004 194 490
- US-A1- 2012 132 070

## Description

### TECHNICAL FIELD

The present disclosure relates to a dehumidifying method and a dehumidifying device including a desiccant wheel and a heat pump device, for supplying an air conditioning chamber with dehumidified air.

### BACKGROUND ART

To dehumidify air to be supplied to an air conditioning chamber, used is a desiccant wheel which has an adsorption surface supporting an adsorption material or a hydrophilic adsorption surface on the disc-shaped wheel surface. Such a desiccant wheel is capable of adsorbing water vapor on the adsorption surface from supply air, to reduce the relative humidity of the supply air. Then, a regeneration process is performed, where the wheel is half-rotated such that the adsorption surface is exposed to the regeneration air having a low humidity, and the adsorbed water vapor is emitted from the adsorption surface. As described above, the wheel is rotated, whereby the adsorption surface of the wheel is exposed alternately to the flow passages of supply air and regeneration air, whereby adsorption and regeneration are performed alternately.

In the adsorption step, adsorption heat is generated due to exothermic reaction and increases the temperature of supply air, and thus supply air is cooled after the adsorption step. Furthermore, in the regeneration step, the regeneration air is pre-heated in a previous step, and the relative humidity of the regeneration air is reduced.

Thus, as disclosed in Patent Documents 1 and 2, with the desiccant wheel, a dehumidifying device is used, which includes a heat pump device including an air cooler for cooling the dehumidified supply air after the adsorption step, and an air heater for pre-heating regeneration air.

Furthermore, Patent Document 3 discloses a dehumidifying device provided with a desiccant wheel and a heat pump device, which further includes a sensible heat exchanger for pre-heating regeneration air with return air of the air conditioning chamber dehumidified by the desiccant wheel, when outside air is used as the regeneration air. Patent Document 3 discloses a dew-proof control unit for preventing dew condensation of the above sensible heat exchanger during operation of the dehumidifying device.

### Citation List

### Patent Literature

Patent Document 1: JP4870843B
Patent Document 2: JP2014-016090A
Patent Document 3: JP2008-151460A

### SUMMARY

### Problems to be Solved

In the above dehumidifying device, when the desiccant wheel adsorbs water vapor, the supply air, heated by exothermic reaction, is cooled by the air cooler of the heat pump device.

A dehumidifying device provided with a typical desiccant wheel is mainly used to supply meat factories and refrigerated warehouses, for instance, with supply air having a relative low temperature of not less than three and not more than ten degrees Celsius.

In a case where supply air is used for another application, such as for drying, it is necessary to increase the temperature of the supply air to further reduce the relative humidity. In this case, the cooling step by the air cooler is unnecessary, for cooling the supply air at the outlet of the desiccant wheel with the air cooler undesirably increases the relative humidity.

Nevertheless, the cooling step by the air cooler is essential for the heat pump cycle, and cannot be omitted. Thus, it is extremely difficult to supply air having a low relative humidity by using the above dehumidifying device alone.

Patent Documents 1 to 3 do not disclose any solution to this problem.

US 2012/132070 A1 discloses moisture removing device provided with a pair of desiccant rotors.

In view of the above, an object of at least one embodiment of the present invention is to enable supply of supply air having a low relative humidity to a consumer in a simple and low-cost manner, without reducing the thermal efficiency of the dehumidifying device.

### Solution to the Problems

The dehumidifying method according to the present invention is defined in appended claim 1 and the corresponding dependent claims. (1) The present application also discloses a dehumidifying method which uses a desiccant wheel having an adsorption surface which is capable of alternately entering a supply air chamber and a regeneration air chamber disposed next to each other, for adsorbing water vapor in supply air flowing through the supply air chamber on the adsorption surface and desorbing the water vapor adsorbed on the adsorption surface with regeneration air flowing through the regeneration air chamber. The method comprises: a dehumidifying step of bringing the supply air into contact with the adsorption surface of the desiccant wheel and causing the desiccant wheel to adsorb the water vapor in the supply air; a cooling step of cooling the supply air dehumidified in the dehumidifying step with an air cooler constituting a part of a heat pump device; a first temperature increasing step of increasing a temperature of the supply air cooled in the cooling step with a temperature increasing medium to reduce a relative humidity of the supply air; a supplying step of supplying an air conditioning chamber with the supply air having the relative humidity reduced in the first temperature increasing step; a second temperature increasing step of increasing a temperature of the regeneration air with an air heater constituting a part of the heat pump device to reduce a relative humidity of the regeneration air; and a desorbing step of bringing the regeneration air heated in the second temperature increasing step into contact with the adsorption surface and desorbing the water vapor adsorbed on the adsorption surface from the adsorption surface.

According to the above method (1), heat exchange is performed between the temperature increasing medium and the supply air in the first temperature increasing step to increase the temperature of the supply air, whereby it is possible to provide the air conditioning chamber, which is a consumer, with the supply air having a reduced relative humidity. The first temperature increasing step does not affect operation of the heat pump device, and thus does not decrease the coefficient of performance (COP) of the heat pump device.

Furthermore, in the first temperature increasing step, it is possible to guide the supply air flow formed in the supply air chamber as it is to the outside of the supply air chamber to exchange heat with the temperature increasing medium, and thus it is unnecessary to provide an additional blower or the like for forming a supply air flow. Thus, the cost and the power do not increase, and thus the thermal efficiency of the dehumidifying device does not decrease.

Accordingly, it is possible to maintain a high thermal efficiency for the entire dehumidifying device, in a simple and low-cost manner.
(2) In the above method (1), the method further comprises a pre-cooling step of pre-cooling the supply air with a pre-cooler and increasing the relative humidity of the supply air, as a preparation process before the dehumidifying step.
   According to the above method (2), the pre-cooling step is performed before the dehumidifying step, and thus it is possible to increase the relative humidity of the supply air before being sent to the desiccant wheel, and thereby to improve the dehumidifying effect by the desiccant wheel.
(3) In the above method (1) or (2), the temperature increasing medium is at least a part of the regeneration air after desorbing the water vapor from the desiccant wheel in the desorbing step.
   According to the above method (3), the regeneration air having a temperature of not less than 50 and not more than 60 degrees Celsius after being heated by the air heater and utilized in water vapor desorption is used as the temperature increasing medium in the first temperature increasing step. Thus, it is unnecessary to provide another temperature increasing medium, which enables operation in which the thermal efficiency of the entire dehumidifying device does not deteriorate.
(4) In the above method (1) or (2), the temperature increasing medium is outside air or return air discharged from the air conditioning chamber, and the outside air or the return air after increasing the temperature of the supply air in the first temperature increasing step serves as the supply air in each of the steps from the pre-cooling step or the dehumidifying step to the supply step.
   According to the above method (4), outside air having a relatively high temperature (e.g. outside air in summer) or return air is utilized as the temperature increasing medium in the first temperature increasing step, and thereby it is possible to make effective use of the potential heat of such air. Furthermore, outside air or return air having a temperature reduced in the first temperature increasing step is utilized as supply air, and thereby it is possible to reduce cooling load in the pre-cooling step, which is a pre-treatment before the dehumidifying step.
(5) In the above method (1) or (2), the temperature increasing medium is outside air or return air discharged from the air conditioning chamber, and the outside air or the return air after increasing the temperature of the supply air in the first temperature increasing step serves as the regeneration air in the second temperature increasing step and the desorbing step.
   According to the above method (5), outside air having a relatively high temperature (e.g. outside air in summer) or return air from the air conditioning chamber having a temperature maintained to be relatively high is utilized as the temperature increasing medium in the first temperature increasing step, and thereby it is possible to utilize the potential heat amount of the outside air or the return air. Furthermore, with the temperature increasing device for performing the first temperature increasing step disposed in the vicinity of the outlet of the supply air flow in the supply air chamber, it is possible to shorten the piping constituting the supply air passage and the piping constituting the regeneration air passage to reduce the cost, as well as to reduce pressure loss of air that flows through the piping.
(6) In any one of the above methods (1) to (5), the air conditioning chamber is a drying chamber.
   According to the above method (6), the supply air having a temperature increased and a relative humidity reduced in the first temperature increasing step is used to dry objects to be dried in the drying chamber, and thereby it is possible to improve the drying effect.
(7) The present application also discloses a dehumidifying device which comprises: a supply air chamber and a regeneration air chamber disposed next to each other; a first blower disposed in the supply air chamber for forming a supply air flow inside the supply air chamber; a second blower disposed in the regeneration air chamber for forming a regeneration air flow inside the regeneration air chamber; a desiccant wheel having an adsorption surface disposed across the supply air chamber and the regeneration air chamber; a heat pump device having an air cooler disposed in the supply air chamber, for cooling the supply air flow dehumidified by the desiccant wheel, and an air heater disposed in the regeneration air chamber, for increasing a temperature of the regeneration air flow upstream of the desiccant wheel; and a temperature increasing device for exchanging heat between a temperature increasing medium and the supply air cooled by the air cooler.
   According to the above configuration (7), heat exchange is performed between the temperature increasing medium and the supply air by the temperature increasing device to increase the temperature of the supply air, whereby it is possible to supply a consumer with the supply air having a reduced relative humidity. The heat exchange between the temperature increasing medium and the supply air by the temperature increasing device does not affect operation of the heat pump device, and thus does not decrease the coefficient of performance (COP) of the heat pump device.
   Furthermore, the supply air flow formed in the supply air chamber and the regeneration air flow formed in the regeneration air chamber may be introduced directly into the temperature increasing device, whereby it is unnecessary to provide the temperature increasing device with an additional blower for forming the supply air flow and the regeneration air flow. Thus, merely providing the temperature increasing device is sufficient, and thereby the cost and the power do not increase, and thus the thermal efficiency of the dehumidifying device does not decrease.
   Accordingly, it is possible to maintain a high thermal efficiency for the entire dehumidifying device, in a simple and low-cost manner.
(8) In the above configuration (7), the dehumidifying device further comprises a pre-cooler for pre-cooling the supply air introduced into the supply air chamber.
   With the above configuration (8), with the pre-cooler described above, it is possible to increase the relative humidity of the supply air before being sent to the desiccant wheel, and thereby it is possible to improve the dehumidifying effect by the desiccant wheel.
(9) In the above configuration (7) or (8), the dehumidifying device further comprises a regeneration air passage for sending at least a part of regeneration air discharged from the regeneration air chamber to the temperature increasing device as the temperature increasing medium.
   According to the above configuration (9), the regeneration air having a temperature of not less than 50 and not more than 60 degrees Celsius after being heated by the air heater and serving in regeneration of the desiccant wheel is supplied to the temperature increasing device as the temperature increasing medium. Thus, it is unnecessary to provide another temperature increasing medium, which makes it possible to maintain a high thermal efficiency for the dehumidifying device. This method utilizes regeneration air having a temperature of not less than 50 and not more than 60 degrees Celsius. The temperature of the regeneration air does not change substantially through a year, and thus use of such regeneration air is effective in a case where the dehumidifying device needs to be operated all year long.
(10) In the above configuration (7) or (8), the dehumidifying device further comprises a temperature increasing medium passage for sending the temperature increasing medium to the temperature increasing device; a relative humidity meter for detecting a relative humidity of the supply air after heat exchange with the temperature increasing medium in the temperature increasing device; a flow-rate regulating valve disposed in the temperature increasing medium passage; and a control part for controlling an opening degree of the flow-rate regulating valve to control at least one of the temperature of the supply air or the relative humidity of the supply air to a set value.
   According to the above configuration (10), it is possible to control the relative humidity of the supply air supplied to a consumer to a desired relative humidity according to the usage.
(11) In the above configuration (10), the temperature increasing medium passage is a regeneration air passage for sending at least a part of the regeneration air discharged from the regeneration air chamber to the temperature increasing device as the temperature increasing medium.

According to the above configuration (11), the regeneration air having a temperature of not less than 50 and not more than 60 degrees Celsius after being heated by the air heater and serving in regeneration of the desiccant wheel is supplied to the temperature increasing device as the temperature increasing medium. Thus, it is unnecessary to provide another temperature increasing medium, which makes it possible to maintain a high thermal efficiency for the dehumidifying device.

Furthermore, it is possible to control the relative humidity of the supply air supplied to a consumer to a desired relative humidity according to the usage.

### Advantageous Effects

According to at least one embodiment of the present invention, it is possible to supply a consumer with supply air having a low relative humidity simply and at low cost, without reducing the thermal efficiency of the dehumidifying device.

### BRIEF DESCRIPTION OF DRAWINGS

FIG. 1 is a configuration diagram of a dehumidifying device according to an embodiment.
FIG. 2 is a configuration diagram of a dehumidifying device according to an embodiment.
FIG. 3 is a configuration diagram of a dehumidifying device according to an embodiment.
FIG. 4 is a configuration diagram of a dehumidifying device according to an embodiment.
FIG. 5 is a flowchart of a dehumidifying method according to an embodiment.
FIG. 6 is a perspective view of a temperature increasing device according to an embodiment.

### DETAILED DESCRIPTION

With reference to the accompanied drawings, some embodiments of the present embodiments will be described. It is intended, however, that unless particularly specified, dimensions, materials, shapes, relative positions and the like of components described in the embodiments or illustrated in the drawings shall be interpreted as illustrative only and not intended to limit the scope of the present invention which is defined by the appending claims.

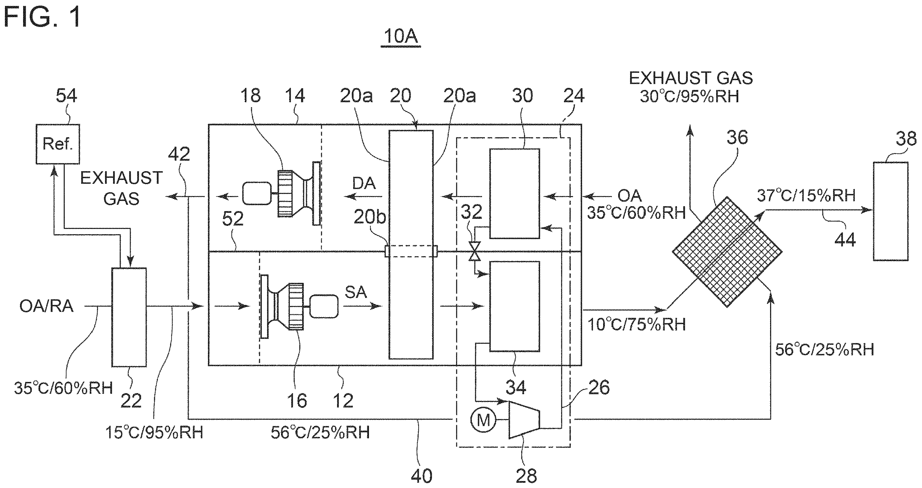

Dehumidifying devices 10A to 10D according to some embodiments of the present invention will now be described with reference to FIGs. 1 to 6.

In the dehumidifying devices 10A to 10D, as shown in FIGs. 1 to 4, a supply air chamber 12 and a regeneration air chamber 14 are disposed next to each other. In the supply air chamber 12, a processing fan (first blower) 16 for forming a supply air flow SA inside the supply air chamber 12 is provided. In the regeneration air chamber 14, a regeneration fan (second blower) 18 for forming a regeneration air flow DA inside the regeneration air chamber 14 is provided.

Furthermore, a desiccant wheel 20 is provided, which has an adsorption surface 20a disposed across the supply air chamber 12 and the regeneration air chamber 14. The desiccant wheel 20 rotates about the rotational shaft 20b, and thereby the adsorption surface 20a enters the supply air chamber 12 and the regeneration air chamber 14 alternately.

The supply air to be introduced into the supply air chamber 12 by the processing fan 16 is pre-cooled by the pre-cooler 22 disposed upstream of the supply air chamber 12. The pre-cooler 22 may not necessarily be provided, and may be omitted.

The dehumidifying devices 10A to 10D are provided with a heat pump device. The heat pump device 24 includes a compressor 28, an air heater (condenser) 30, an expansion valve 32, and an air cooler (evaporator) 34 disposed in a refrigerant circulation passage 26, as devices constituting a heat pump cycle.

Furthermore, a temperature increasing device 36 is provided downstream of the air cooler 34, for exchanging heat of the supply air cooled by the air cooler 34 with a temperature increasing medium to increase the temperature of the supply air.

In the depicted embodiments, as shown in FIGs. 1 to 4, the temperature increasing device 36 is produced separately from the supply air chamber 12 and the regeneration air chamber 14.

In such a configuration, water vapor contained in the supply air flow SA formed in the supply air chamber 12 is adsorbed by the adsorption surface 20a of the desiccant wheel 20. The desiccant wheel 20 rotates, and thereby the adsorption surface 20a adsorbing the water vapor moves to the regeneration air chamber 14. The water vapor adsorbed by the adsorption surface 20a is desorbed by the regeneration air flow DA formed in the regeneration air chamber 14.

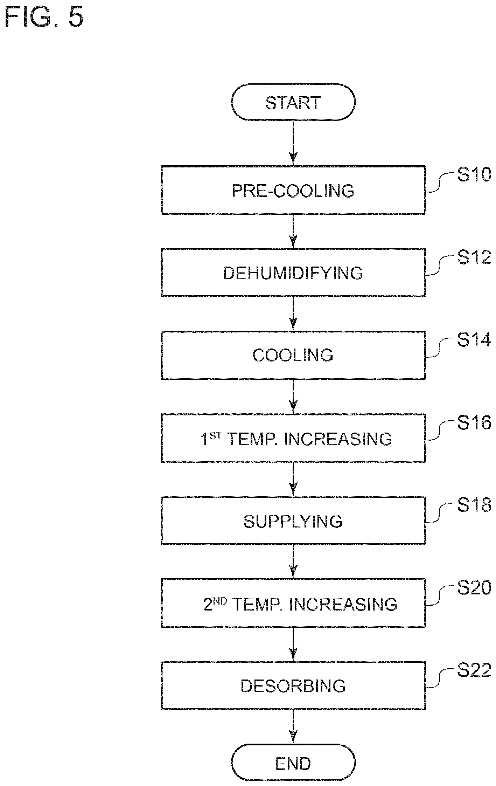

Such a dehumidifying step will be described with reference to FIG. 5.

In FIG. 5, in the pre-cooling step S10, the supply air is pre-cooled by the pre-cooler 22. Accordingly, the temperature of the supply air is reduced and the relative humidity is increased, and thereby water vapor contained in the supply air can be more easily adsorbed by the desiccant wheel 20. The pre-cooling step S10 may not necessarily be provided, and may be omitted.

Next, in the dehumidifying step S12, the supply air pre-cooled in the pre-cooling step S10 is brought into contact with the adsorption surface 20a of the desiccant wheel 20, and the water vapor contained in the supply air is adsorbed by the adsorption surface 20a, thus dehumidifying the supply air.

Then, the supply air dehumidified in the dehumidifying step S12 is cooled by the air cooler 34 (cooling step S14). Furthermore, the temperature increasing device 36 exchanges heat of the cooled supply air with the temperature increasing medium to increase the temperature of the supply air and reduce the relative humidity (first temperature increasing step S16).

Next, the supply air with an increased temperature and a reduced relative humidity is supplied to the air conditioning chamber 38, which is a consumer (supplying step S18).

Meanwhile, the regeneration air flow DA formed in the regeneration air chamber 14 is heated by the air heater 30, whereby the temperature increases and the relative humidity decreases (second temperature increasing step S20). The adsorption surface 20a adsorbing water vapor contained in the supply air in the supply air chamber 12 moves to the regeneration air chamber 14, due to rotation of the desiccant wheel 20. The regeneration air flow DA, having a temperature increased by the air heater 30 and a relatively humidity thereby reduced, is brought into contact with the adsorption surface 20a, and thereby the water vapor adsorbed on the adsorption surface 20a is desorbed (desorption step S22).

In an exemplary embodiment, the desiccant wheel 20 is, for instance, covered with a special sheet impregnating adsorbent on its surface, thus forming the adsorption surface 20a, and is formed to have a honeycomb shape. The desiccant wheel 20 is rotated by a driving device (not shown) such as a motor at a low speed, that is, a few dozen times per hour, thus entering the supply air chamber 12 and the regeneration air chamber 14 alternately, to repeat adsorption and regeneration continuously and alternately. An inorganic adsorbent or a high-polymer adsorbent, such as silica gel and zeolite, is used as the adsorbent.

In an exemplary embodiment, CO₂, which reaches the supercritical state and a high temperature in a high-pressure region, is used as a refrigerant. By using CO₂, it is possible to increase the temperature of the regeneration air with the air heater 30 to a high temperature of not less than 80 degrees Celsius.

In an exemplary embodiment, as shown in FIG. 1, provided is a regeneration air passage 40 for sending a part of the regeneration air discharged from the regeneration air chamber 14 to the temperature increasing device 36 as a temperature increasing medium.

In the embodiment shown in FIG. 1, the regeneration air passage 40 is a branch passage that branches from a discharge passage 42 of regeneration air disposed in the regeneration air chamber 14, and is guided to the temperature increasing device 36.

In this embodiment, the regeneration air having a temperature of not less than 50 degrees and not more than 60 degrees Celsius, discharged from the regeneration air chamber 14, increases the temperature of the supply air to reduce the relative humidity, and the supply air having a reduced relative humidity is supplied to the air conditioning chamber 38. The regeneration air is discharged after serving to increase the temperature of the supply air.

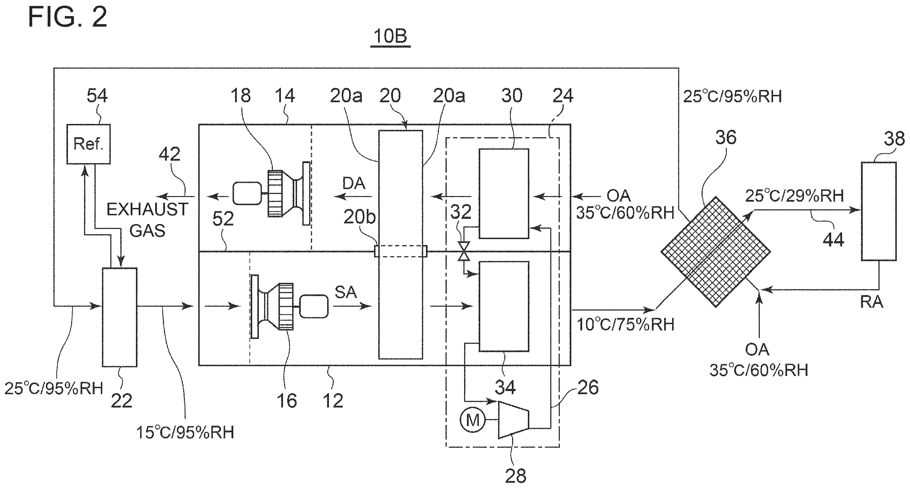

In an exemplary embodiment, as shown in FIG. 2, the temperature increasing medium used by the temperature increasing device 36 is outside air OA or return air RA discharged from the air conditioning chamber 38.

The outside air OA or the return air RA after being supplied to the temperature increasing device 36 as a temperature increasing medium and increasing the temperature of the supply air in the temperature increasing step S16 serves as supply air in the pre-cooling step S10, the dehumidifying step S12, the cooling step S14, the temperature increasing step S16, and the supply step S18.

In this embodiment, outside air OA having a relatively high temperature (e.g. outside air in summer) or return RA having a relatively high temperature is used as a temperature increasing medium.

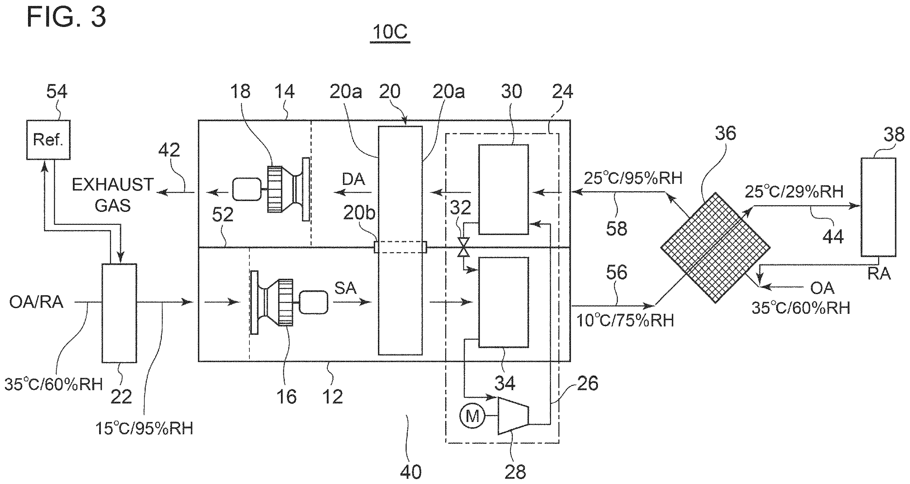

In an exemplary embodiment, as shown in FIG. 3, the heat medium used by the temperature increasing device 36 is the outside air OA or the return air RA discharged from the air conditioning chamber 38.

The outside air OA or the return air RA after being supplied to the temperature increasing device 36 as a temperature increasing medium and increasing the temperature of the supply air in the temperature increasing step S16 serves as regeneration air in the temperature increasing step S20 and the desorbing step S22.

In this embodiment, outside air having a relatively high temperature (e.g. outside air in summer) or return air RA having a temperature maintained to be relatively high is utilized as a temperature increasing medium in the first temperature increasing step S16, and then is introduced into the regeneration air chamber 14 as regeneration air.

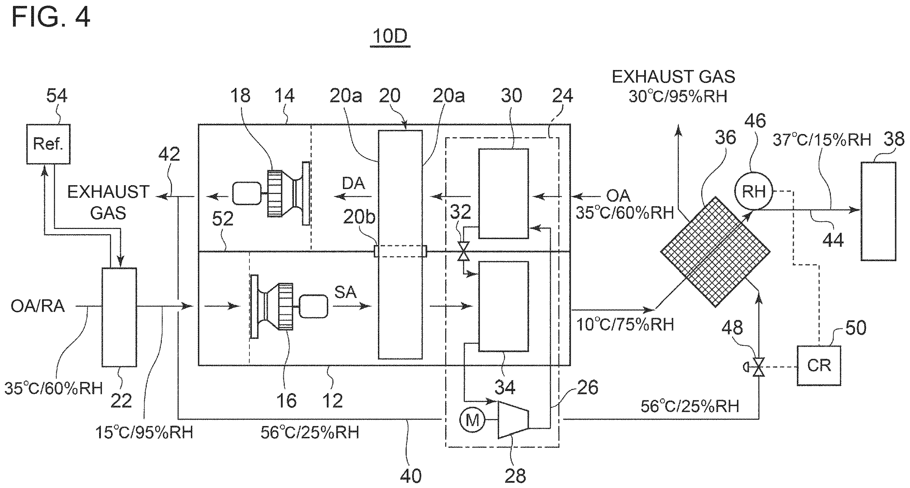

In an exemplary embodiment, as shown in FIG. 4, the following configuration is further added to the configuration of the embodiment shown in FIG. 1.

In FIG. 4, further provided is a relative humidity meter 46 for detecting the relative humidity of the supply air having exchanged heat with the temperature increasing medium by the temperature increasing device 36, a flow-rate regulating valve 48 disposed in the regeneration air passage 40, and a control part 50 for controlling the opening degree of the flow-rate regulating valve 48 and controlling the relative humidity of the supply air at the outlet of the temperature increasing device to a set value.

In the configuration shown in the drawing, the relative humidity meter 46 is disposed in the discharge passage 44 for discharging the supply air from the temperature increasing device 36.

In an exemplary embodiment, the air conditioning chamber 38 is a drying chamber for drying objects to be dried housed inside the drying chamber. To the drying chamber, supply air heated by the temperature increasing device 36 and having an increased temperature and a low relative humidity is supplied, to serve in drying of objects to be dried.

In the embodiment shown in the drawing, the supply air chamber 12 and the regeneration air chamber 14 extend along the flow direction of the supply air flow SA and the regeneration air flow DA. Furthermore, the supply air chamber 12 and the regeneration air chamber 14 are separated by the partition wall 52, and the rotational shaft 20b of the desiccant wheel 20 is disposed inside the partition wall 52.

In the embodiment, as shown in FIGs. 1 to 4, the supply air flow SA formed in the supply air chamber 12 and the regeneration air flow DA formed in the regeneration air chamber 14 are configured to flow alternately, that is, to flow in opposite directions to each other.

Accordingly, it is possible to arrange two air heaters 30 close to each other, the air heater 30 disposed downstream of the desiccant wheel 20 in the supply air chamber 12 and the air heater 30 disposed upstream of the desiccant wheel 20 in the regeneration air chamber 14. Thus, it is possible to shorten the refrigerant circulation passage 26 and reduce the cost.

In an exemplary embodiment, as shown in FIGs. 1, 3, and 4, the outside air OA or the return air RA discharged from the air conditioning chamber 38 is used as the supply air.

In the embodiment shown in the drawings, as shown in FIGs. 1 to 4, provided is a refrigerator 54 for supplying the pre-cooler 22 with a refrigerant.

In the embodiment shown in FIGs. 1 and 2, the outside air OA is used as the regeneration air to be supplied to the regeneration air chamber 14. Summer outside air having a high temperature is suitable as the outside air OA.

In the embodiment shown in FIGs. 2 and 3, regeneration air after serving in regeneration of the desiccant wheel 20 is discharged.

The values in FIGs. 1 to 4 show an example of the temperature/relative humidity of each section.

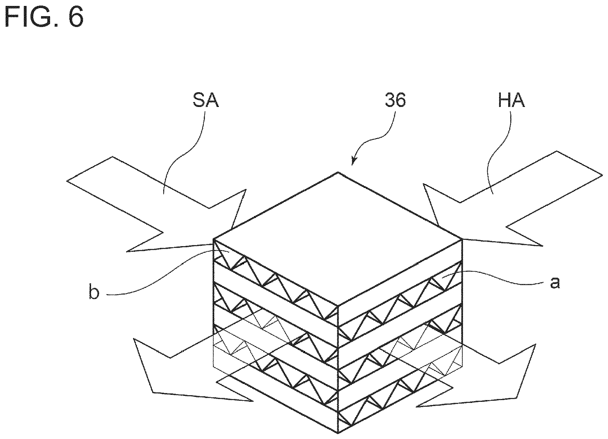

FIG. 6 is a diagram of the temperature increasing device 36 according to an embodiment.

In FIG. 6, the flow passage 'a' of the supply air flow SA formed in the temperature increasing device 36 and the flow passage 'b' of the temperature increasing medium HA are formed in directions intersecting with each other (in the drawings, intersecting at right angle). Furthermore, in the configuration shown in the drawing, multiple stages of flow passages 'a' and flow passages 'b' are formed alternately.

The partition wall of the temperature increasing device 36 comprises a heat-conductive material (e.g. metal or resin), and only needs to have a heat resistance of not more than 50 degrees Celsius. Further, the material is such that the supply air flow SA and the temperature increasing medium HA exchange sensible heat, and that humidity does not transfer between the supply air flow SA and the temperature increasing medium HA.

In some embodiments, it is possible to feed supply air having a temperature increased and a relative humidity reduced in the first temperature increasing step S16 to the air conditioning chamber 38, which is a consumer, and the air conditioning chamber 38 can be used as, for instance, a drying chamber housing the object to be dried inside. The first temperature increasing step S16 does not affect operation of the heat pump device 24, and thus does not decrease the coefficient of performance (COP) of the heat pump device 24.

Furthermore, the supply air flow SA and the flow of the temperature increasing medium to be introduced into the temperature increasing device 36 are formed by the processing fan 16 disposed in the supply air chamber 12 and the regeneration fan 18 disposed in the regeneration air chamber 14, and thus an additional flow-forming unit is not required, which makes it unnecessary to increase the costs and driving power.

Furthermore, with the pre-cooling step S10, it is possible to increase the relative humidity of the supply air before being sent to the desiccant wheel 20, and thereby it is possible to improve the dehumidifying effect by the desiccant wheel 20.

Accordingly, it is possible to maintain a high thermal efficiency for the entire dehumidifying device, simply and at low-cost.

Furthermore, according to the embodiment shown in FIGs. 1 to 4, as the temperature increasing medium used in the temperature increasing step S16, regeneration air having a relatively high temperature (not less than 50 and not more than 60 degrees Celsius) discharged from the regeneration air chamber 14, and thus it is possible to operate the dehumidifying devices 10A and 10D without reducing the thermal efficiency of the entire device. Furthermore, it is possible to suppress unnecessary heat dissipation to outside of the dehumidifying device, and maintain a high thermal efficiency for the dehumidifying device 10A and 10D.

This method utilizes regeneration air having a temperature of not less than 50 and not more than 60 degrees Celsius, the temperature not changing substantially through a year, and thus is effective in a case where the dehumidifying device needs to be operated all year long.

As shown in FIGs. 1 and 4, with the dehumidifying device 10A and 10D, it is possible to supply the air conditioning chamber 38 with supply air of not less than 30 degrees Celsius and having a low relative humidity.

Furthermore, according to the embodiment shown in FIGs. 2 and 3, outside air OA (in particular, outside air in summer) or return air RA discharged from the air conditioning chamber 38 is used as the temperature increasing medium in the temperature increasing step S16, and thereby it is possible to make good use of potential heat of such air. Furthermore, according to the embodiment shown in FIG. 2, outside air OA or return air RA having a temperature reduced in the first temperature increasing step S16 is utilized as supply air, and thereby it is possible to reduce cooling load in the pre-cooling step S10.

As shown in FIGs. 2 and 3, with the dehumidifying device 10B and 10C, it is possible to supply the air conditioning chamber 38 with supply air of not less than 20 degrees Celsius and having a low relative humidity.

Furthermore, according to the embodiment shown in FIG. 4, it is possible to, with the control part 50, control the relative humidity of the supply air supplied to the air conditioning chamber 38 (consumer) to a desired relative humidity according to the usage.

Furthermore, according to the embodiment shown in FIG. 3, with the temperature increasing device 36 disposed in the vicinity of the outlet of the supply air flow SA in the supply air chamber 12, it is possible to shorten the piping constituting the supply air passage 56 and the piping constituting the regeneration air passage 58 to reduce the cost, as well as reduce pressure loss of air that flows through the piping.

Furthermore, with the temperature increasing device 36 having a simple configuration as shown in FIG. 6, it is possible to exchange sensible heat at low cost and with a high heat-exchange efficiency. Furthermore, humidity does not transfer between the supply air flow SA and the temperature increasing medium HA, and thus it is possible to reduce the relative humidity of the supply air flow SA considerably. Furthermore, by producing the temperature increasing device 36 separately from the supply air chamber 12 and the regeneration air chamber 14, it is possible to install, remove, and check and repair the temperature increasing device 36 more easily.

Furthermore, the relative humidity meter 46, the flow-rate regulating valve 48, and the control part 50 provided for the embodiment shown in FIG. 4 can also be provided for the dehumidifying device 10B shown in FIG. 2 or the dehumidifying device 10C shown in FIG. 3.

That is, the flow-rate regulating valve 48 is disposed in the flow passage for sending the outside air OA to the temperature increasing device 36 or the flow passage for sending the return air RA to the temperature increasing device 36, and the relative humidity meter 46 is disposed in the discharge passage 44. Furthermore, the opening degree of the flow-rate regulating valve 48 is controlled by the control part 50, and the relative humidity of the supply air flow SA of the discharge passage 44 is regulated.

### Industrial Applicability

According to at least one embodiment of the present invention, it is possible to supply the supply air having a low relative humidity to a consumer simply and at low cost, without reducing the thermal efficiency of the dehumidifying device.

### Description of Reference Numerals

- 10A, 10B, 10C, 10D, 10E: Dehumidifying device
- 12: Supply air chamber
- 14: Regeneration air chamber
- 16: Processing fan (first blower)
- 18: Regeneration fan (second blower)
- 20: Desiccant wheel
- 20a: Adsorption surface
- 20b: Rotational shaft
- 22: Pre-cooler
- 24: Heat pump device
- 26: Refrigerant circulation passage
- 28: Compressor
- 30: Air heater
- 32: Expansion valve
- 34: Air cooler
- 36: Temperature increasing device
- 38: Air conditioning chamber
- 40, 58: Regeneration air passage
- 42, 44: Discharge passage
- 46: Relative humidity meter
- 48: Flow-rate regulating valve
- 50: Control part
- 52: Partition wall
- 54: Refrigerator
- 56: Supply air passage
- DA: Regeneration air flow
- HA: Temperature increasing medium
- OA: Outside air
- RA: Return air
- SA: Supply air flow
- a, b: Flow passage

## Claims

1. A dehumidifying method,
using a desiccant wheel (20) having an adsorption surface (20a) which is capable of alternately entering a supply air chamber (12) and a regeneration air chamber (14) disposed next to each other,
for adsorbing water vapor in supply air flowing through the supply air chamber (12) on the adsorption surface (20a) and desorbing the water vapor adsorbed on the adsorption surface (20a) with regeneration air flowing through the regeneration air chamber (14),
the method comprising:
a dehumidifying step of bringing the supply air into contact with the adsorption surface (20a) of the desiccant wheel (20) and causing the desiccant wheel (20) to adsorb the water vapor in the supply air;
a cooling step of cooling the supply air dehumidified in the dehumidifying step;
a first temperature increasing step of increasing a temperature of the supply air cooled in the cooling step with a temperature increasing medium to reduce a relative humidity of the supply air;
a supplying step of supplying an air conditioning chamber (38) with the supply air having the relative humidity reduced in the first temperature increasing step;
a second temperature increasing step of increasing a temperature of the regeneration air to reduce a relative humidity of the regeneration air; and
a desorbing step of bringing the regeneration air heated in the second temperature increasing step into contact with the adsorption surface (20a) and desorbing the water vapor adsorbed on the adsorption surface (20a) from the adsorption surface (20a),
**characterized in that**:
the cooling step is carried out with an air cooler (34) constituting a part of a heat pump device (24); that,
the second temperature increasing step is carried out with an air heater (30) constituting a part of the heat pump device (24); and that
the temperature increasing medium is one of the followings:
at least a part of the regeneration air after desorbing the water vapor from the desiccant wheel (20) in the desorbing step; and
outside air (OA) or return air (RA) discharged from the air conditioning chamber (38).

2. The dehumidifying method according to claim 1,
further comprising a pre-cooling step of pre-cooling the supply air with a pre-cooler (22) and increasing the relative humidity of the supply air, as a preparation process before the dehumidifying step.

3. The dehumidifying method according to claim 1 or 2,
wherein the temperature increasing medium is at least a part of the regeneration air discharged from the regeneration air chamber and having a temperature of not less than 50 and not more than 60 degrees Celsius.

4. The dehumidifying method according to claim 1 or 2,
wherein the temperature increasing medium is outside air (OA) or return air (RA) discharged from the air conditioning chamber (38), and
wherein the outside air (OA) or the return air (RA) after increasing the temperature of the supply air in the first temperature increasing step serves as the supply air in each of the steps from the pre-cooling step or the dehumidifying step to the supply step.

5. The dehumidifying method according to claim 1 or 2,
wherein the temperature increasing medium is outside air (OA) or return air (RA) discharged from the air conditioning chamber (38), and
wherein the outside air (OA) or the return air (RA) after increasing the temperature of the supply air in the first temperature increasing step serves as the regeneration air in the second temperature increasing step and the desorbing step.

6. The dehumidifying method according to any one of claims 1 to 5,
wherein the air conditioning chamber (38) is a drying chamber.

7. A dehumidifying device (10A to 10D), comprising:
a supply air chamber (12) and a regeneration air chamber (14) disposed next to each other;
a first blower (16) disposed in the supply air chamber (12) for forming a supply air flow (SA) inside the supply air chamber (12);
a second blower (18) disposed in the regeneration air chamber (14) for forming a regeneration air flow (DA) inside the regeneration air chamber (14); and
a desiccant wheel (20) having an adsorption surface (20a) disposed across the supply air chamber (12) and the regeneration air chamber (14),
**characterized by** further comprising:
a heat pump device (24) having an air cooler (34) disposed in the supply air chamber (12), for cooling the supply air flow (SA) dehumidified by the desiccant wheel (20), and an air heater (30) disposed in the regeneration air chamber (14), for increasing a temperature of the regeneration air flow (DA) upstream of the desiccant wheel (20); and
a temperature increasing device (36) for exchanging heat between a temperature increasing medium and the supply air cooled by the air cooler (34),
wherein the temperature increasing device (36) is configured to increase a temperature of the supply air by using the temperature increasing medium which is one of the followings:
at least a part of the regeneration air flow (DA) after desorbing water vapor from the desiccant wheel (20); and
outside air (OA) or return air (RA) discharged from an air conditioning chamber (38) which is a consumer of the supply air flow (SA).

8. The dehumidifying device (10A to 10D) according to claim 7, further comprising a pre-cooler (22) for pre-cooling the supply air introduced into the supply air chamber (12).

9. The dehumidifying device (10A, 10D) according to claim 7 or 8, comprising a regeneration air passage (40) for sending at least a part of regeneration air discharged from the regeneration air chamber (14) to the temperature increasing device (36) as the temperature increasing medium.

10. The dehumidifying device (10D) according to claim 7 or 8, further comprising:
a temperature increasing medium passage for sending the temperature increasing medium to the temperature increasing device (36);
a relative humidity meter (46) for detecting a relative humidity of the supply air after heat exchange with the temperature increasing medium in the temperature increasing device (36);
a flow-rate regulating valve (48) disposed in the temperature increasing medium passage; and
a control part (50) for controlling an opening degree of the flow-rate regulating valve (48) to control at least one of the temperature of the supply air or the relative humidity of the supply air to a set value.

11. The dehumidifying device (10A, 10D) according to claim 10,
wherein the temperature increasing medium passage is a regeneration air passage (40) for sending at least a part of the regeneration air discharged from the regeneration air chamber (14) to the temperature increasing device (36) as the temperature increasing medium.

## Patentansprüche

1. Entfeuchtungsverfahren,
das ein Trockenmittelrad (20) mit einer Adsorptionsfläche (20a), das in der Lage ist, abwechselnd in eine Zuluftkammer (12) und eine Regenerationsluftkammer (14), die nebeneinander angeordnet sind, einzutreten,
zum Adsorbieren von Wasserdampf in Zuluft, die durch die Zuluftkammer (12) strömt, auf der Adsorptionsfläche (20a) und Desorbieren des Wasserdampfs, der auf der Adsorptionsfläche (20a) adsorbiert ist, mit Regenerationsluft, die durch die Regenerationsluftkammer (14) strömt,
wobei das Verfahren Folgendes umfasst:
einen Entfeuchtungsschritt, um die Zuluft mit der Adsorptionsfläche (20a) des Trockenmittelrads (20) in Kontakt zu bringen und zu bewirken, dass das Trockenmittelrad (20) den Wasserdampf in der Zuluft adsorbiert;
einen Kühlschritt, um die Zuluft, die im Entfeuchtungsschritt entfeuchtet wird, zu kühlen;
einen ersten Temperaturerhöhungsschritt, um eine Temperatur der Zuluft, die im Kühlschritt gekühlt wird, mit einem Temperaturerhöhungsmedium zu erhöhen, um eine relative Feuchtigkeit der Zuluft zu reduzieren;
einen Zuführschritt, um die Zuluft, die relative Feuchtigkeit aufweist, die im ersten Temperaturerhöhungsschritt reduziert wird, einer Klimatisierungskammer (38) zuzuführen;
einen zweiten Temperaturerhöhungsschritt, um eine Temperatur der Regenerationsluft zu erhöhen, um eine relative Feuchtigkeit der Regenerationsluft zu reduzieren; und
einen Desorptionsschritt, um die Regenerationsluft, die im zweiten Temperaturerhöhungsschritt erwärmt wird, mit der Adsorptionsfläche (20a) in Kontakt zu bringen und den Wasserdampf, der auf der Adsorptionsfläche (20a) adsorbiert wird, von der Adsorptionsfläche (20a) zu desorbieren,
**dadurch gekennzeichnet, dass**:
der Kühlschritt mit einem Luftkühler (34), der einen Teil einer Wärmepumpenvorrichtung (24) bildet, ausgeführt wird; dass
der zweite Temperaturerhöhungsschritt mit einem Lufterwärmer (30), der einen Teil der Wärmepumpenvorrichtung (24) bildet, ausgeführt wird und dass
das Temperaturerhöhungsmedium eines von Folgendem ist:
mindestens ein Teil der Regenerationsluft, nachdem der Wasserdampf im Desorptionsschritt vom Trockenmittelrad (20) desorbiert wurde; und
Außenluft (OA) oder Rückluft (RA), die aus der Klimatisierungskammer (38) abgeführt wird.

2. Entfeuchtungsverfahren nach Anspruch 1,
das ferner einen Vorkühlschritt umfasst, um die Zuluft mit einem Vorkühler (22) vorzukühlen und die relative Feuchtigkeit der Zuluft als einen Vorbereitungsprozess vor dem Entfeuchtungsschritt zu erhöhen.

3. Entfeuchtungsverfahren nach Anspruch 1 oder 2,
wobei das Temperaturerhöhungsmedium mindestens ein Teil der Regenerationsluft ist, die aus der Regenerationsluftkammer abgeführt wird und eine Temperatur von nicht weniger als 50 und nicht mehr als 60 Grad Celsius aufweist.

4. Entfeuchtungsverfahren nach Anspruch 1 oder 2,
wobei das Temperaturerhöhungsmedium Außenluft (OA) oder Rückluft (RA), die aus der Klimatisierungskammer (38) abgeführt wird, ist, und
wobei die Außenluft (OA) oder die Rückluft (RA) nach dem Erhöhen der Temperatur der Zuluft im ersten Temperaturerhöhungsschritt bei jedem der Schritte vom Vorkühlschritt oder vom Entfeuchtungsschritt bis zum Zuführschritt als die Zuluft dient.

5. Entfeuchtungsverfahren nach Anspruch 1 oder 2,
wobei das Temperaturerhöhungsmedium Außenluft (OA) oder Rückluft (RA), die aus der Klimatisierungskammer (38) abgeführt wird, ist, und
wobei die Außenluft (OA) oder die Rückluft (RA) nach dem Erhöhen der Temperatur der Zuluft beim ersten Temperaturerhöhungsschritt beim zweiten Temperaturerhöhungsschritt und beim Desorptionsschritt als die Regenerationsluft dient.

6. Entfeuchtungsverfahren nach einem der Ansprüche 1 bis 5,
wobei die Klimatisierungskammer (38) eine Trocknungskammer ist.

7. Entfeuchtungsvorrichtung (10A bis 10D), die Folgendes umfasst:
eine Zuluftkammer (12) und eine Regenerationsluftkammer (14), die nebeneinander angeordnet sind;
ein erstes Gebläse (16), das in der Zuluftkammer (12) angeordnet ist, zum Bilden eines Zuluftstroms (SA) in der Zuluftkammer (12);
ein zweites Gebläse (18), das in der Regenerationsluftkammer (14) angeordnet ist, zum Bilden eines Regenerationsluftstroms (DA) in der Regenerationsluftkammer (14) und
ein Trockenmittelrad (20) mit einer Adsorptionsfläche (20a), das über die Zuluftkammer (12) und die Regenerationsluftkammer (14) angeordnet ist,
**dadurch gekennzeichnet, dass** sie ferner Folgendes umfasst:
eine Wärmepumpenvorrichtung (24) mit einem Luftkühler (34), die in der Zuluftkammer (12) angeordnet ist, zum Kühlen des Zuluftstroms (SA), der vom Trockenmittelrad (20) entfeuchtet wird, und einen Lufterwärmer (30), der in der Regenerationsluftkammer (14) angeordnet ist, zum Erhöhen einer Temperatur des Regenerationsluftstroms (DA) stromaufwärtig vom Trockenmittelrad (20) und
eine Temperaturerhöhungsvorrichtung (36) zum Austauschen von Wärme zwischen einem Temperaturerhöhungsmedium und der Zuluft, die vom Luftkühler (34) gekühlt wird,
wobei die Temperaturerhöhungsvorrichtung (36) dazu ausgelegt ist, eine Temperatur der Zuluft unter Verwendung des Temperaturerhöhungsmediums zu erhöhen, das eines von Folgendem ist:
mindestens ein Teil des Regenerationsluftstroms (DA), nachdem Wasserdampf vom Trockenmittelrad (20) desorbiert wurde; und
Außenluft (OA) oder Rückluft (RA), die aus einer Klimatisierungskammer (38), die ein Verbraucher des Zuluftstroms (SA) ist, abgeführt wird.

8. Entfeuchtungsvorrichtung (10A bis 10D) nach Anspruch 7, die ferner einen Vorkühler (22) zum Vorkühlen der Zuluft, die in die Zuluftkammer (12) eingeleitet wird, umfasst.

9. Entfeuchtungsvorrichtung (10A bis 10D) nach Anspruch 7 oder 8, die einen Regenerationsluftkanal (40) umfasst, um mindestens einen Teil von Regenerationsluft, die aus der Regenerationsluftkammer (14) abgeführt wird, als das Temperaturerhöhungsmedium zur Temperaturerhöhungsvorrichtung (36) zu senden.

10. Entfeuchtungsvorrichtung (10D) nach Anspruch 7 oder 8, die ferner Folgendes umfasst:
einen Temperaturerhöhungsmediumkanal zum Senden des Temperaturerhöhungsmediums zur Temperaturerhöhungsvorrichtung (36);
einen Relativfeuchtigkeitsmesser (46) zum Detektieren einer relativen Feuchtigkeit der Zuluft nach einem Wärmeaustausch mit dem Temperaturerhöhungsmedium in der Temperaturerhöhungsvorrichtung (36);
ein Flussratenregulierventil (48), das im Temperaturerhöhungsmediumkanal angeordnet ist; und
ein Steuerteil (50) zum Steuern eines Öffnungsgrads des Flussratenregulierventils (48), um mindestens eines der Temperatur der Zuluft oder der relativen Feuchtigkeit der Zuluft auf einen Einstellwert zu steuern.

11. Entfeuchtungsvorrichtung (10A, 10D) nach Anspruch 10,
wobei der Temperaturerhöhungsmediumkanal ein Regenerationsluftkanal (40) zum Senden mindestens eines Teils der Regenerationsluft, die aus der Regenerationsluftkammer (14) abgeführt wird, als das Temperaturerhöhungsmedium zur Temperaturerhöhungsvorrichtung (36) ist.

## Revendications

1. Procédé de déshumidification,
utilisant une roue de dessiccation (20) ayant une surface d'adsorption (20a) qui est apte à entrer de manière alternée dans une chambre d'air d'alimentation (12) et une chambre d'air de régénération (14) disposées l'une à côté de l'autre,
pour adsorber de la vapeur d'eau dans l'air d'alimentation traversant la chambre d'air d'alimentation (12) sur la surface d'adsorption (20a) et désorber de la vapeur d'eau adsorbée sur la surface d'adsorption (20a) avec l'air de régénération traversant la chambre d'air de régénération (14),
le procédé comprenant :
une étape de déshumidification consistant à mettre l'air d'alimentation en contact avec la surface d'adsorption (20a) de la roue de dessiccation (20) et amener la roue de dessiccation (20) à adsorber de la vapeur d'eau dans l'air d'alimentation ;
une étape de refroidissement consistant à refroidir l'air d'alimentation déshumidifié dans l'étape de déshumidification ;
une première étape d'augmentation de température consistant à augmenter une température de l'air d'alimentation refroidi dans l'étape de refroidissement avec un milieu d'augmentation de température pour réduire une humidité relative de l'air d'alimentation ;
une étape d'alimentation consistant à alimenter une chambre de climatisation (38) avec l'air d'alimentation ayant l'humidité relative réduite dans la première étape d'augmentation de température ;
une seconde étape d'augmentation de température consistant à augmenter une température de l'air de régénération pour réduire une humidité relative de l'air de régénération ; et
une étape de désorption consistant à mettre l'air de régénération chauffé dans la seconde étape d'augmentation de température en contact avec la surface d'adsorption (20a) et désorber de la surface d'adsorption (20a) la vapeur d'eau adsorbée sur la surface d'adsorption (20a),
**caractérisé en ce que** :
l'étape de refroidissement est réalisée avec un refroidisseur d'air (34) constituant une partie d'un dispositif de pompe à chaleur (24) ; **en ce que**,
la seconde étape d'augmentation de température est réalisée avec un réchauffeur d'air (30) constituant une partie du dispositif de pompe à chaleur (24) ; et **en ce que**
le milieu d'augmentation de température est l'un des suivants :
au moins une partie de l'air de régénération après désorption de la vapeur d'eau de la roue de dessiccation (20) dans l'étape de désorption ; et
de l'air extérieur (OA) ou de l'air de retour (RA) refoulé de la chambre de climatisation (38).

2. Procédé de déshumidification selon la revendication 1,
comprenant en outre une étape de pré-refroidissement consistant à pré-refroidir l'air d'alimentation avec un pré-refroidisseur (22) et augmenter l'humidité relative de l'air d'alimentation, en tant que processus de préparation avant l'étape de déshumidification.

3. Procédé de déshumidification selon la revendication 1 ou 2,
dans lequel le milieu d'augmentation de température est au moins une partie de l'air de régénération refoulé de la chambre d'air de régénération et ayant une température d'au moins 50 et d'au plus 60 degrés Celsius.

4. Procédé de déshumidification selon la revendication 1 ou 2,
dans lequel le milieu d'augmentation de température est de l'air extérieur (OA) ou de l'air de retour (RA) refoulé de la chambre de climatisation (38), et
dans lequel l'air extérieur (OA) ou l'air de retour (RA) après augmentation de la température de l'air d'alimentation dans la première étape d'augmentation de la température sert d'air d'alimentation dans chacune des étapes entre l'étape de pré-refroidissement ou l'étape de déshumidification et l'étape d'alimentation.

5. Procédé de déshumidification selon la revendication 1 ou 2,
dans lequel le milieu d'augmentation de température est de l'air extérieur (OA) ou de l'air de retour (RA) refoulé de la chambre de climatisation (38), et
dans lequel l'air extérieur (OA) ou l'air de retour (RA) après augmentation de la température de l'air d'alimentation dans la première étape d'augmentation de la température sert d'air de régénération dans la seconde étape d'augmentation de température et dans l'étape de désorption.

6. Procédé de déshumidification selon l'une quelconque des revendications 1 à 5,
dans lequel la chambre de climatisation (38) est une chambre de séchage.

7. Dispositif de déshumidification (10A à 10D), comprenant :
une chambre d'air d'alimentation (12) et une chambre d'air de régénération (14) disposées l'une à côté de l'autre ;
une première soufflante (16) disposée dans la chambre d'air d'alimentation (12) pour former un flux d'air d'alimentation (SA) à l'intérieur de la chambre d'air d'alimentation (12) ;
une seconde soufflante (18) disposée dans la chambre d'air de régénération (14) pour former un flux d'air de régénération (DA) à l'intérieur de la chambre d'air de régénération (14) ; et
une roue de dessiccation (20) ayant une surface d'adsorption (20a) disposée à travers la chambre d'air d'alimentation (12) et la chambre d'air de régénération (14),
**caractérisé en ce qu'**il comprend en outre :
un dispositif de pompe à chaleur (24) ayant un refroidisseur d'air (34) disposé dans la chambre d'air d'alimentation (12) pour refroidir le flux d'air d'alimentation (SA) déshumidifié par la roue de dessiccation (20), et un réchauffeur d'air (30) disposé dans la chambre d'air de régénération (14), pour augmenter une température du flux d'air de régénération (DA) en amont de la roue de dessiccation (20) ; et
un dispositif d'augmentation de température (36) pour échanger de la chaleur entre un milieu d'augmentation de température et l'air d'alimentation refroidi par le refroidisseur d'air (34),
dans lequel le dispositif d'augmentation de température (36) est configuré pour augmenter une température de l'air d'alimentation par l'utilisation du milieu d'augmentation de température qui est l'un des suivants :
au moins une partie du flux d'air de régénération (DA) après désorption de la vapeur d'eau de la roue de dessiccation (20) ; et
de l'air extérieur (OA) ou de l'air de retour (RA) refoulé d'une chambre de climatisation (38) qui est une utilisatrice du flux d'air d'alimentation (SA).

8. Dispositif de déshumidification (10A à 10D) selon la revendication 7, comprenant en outre un pré-refroidisseur (22) pour pré-refroidir l'air d'alimentation introduit dans la chambre d'air d'alimentation (12).

9. Dispositif de déshumidification (10A, 10D) selon la revendication 7 ou 8, comprenant un passage d'air de régénération (40) pour envoyer au moins une partie d'un air de régénération refoulé de la chambre d'air de régénération (14) au dispositif d'augmentation de température (36) en tant que milieu d'augmentation de température.

10. Dispositif de déshumidification (10D) selon la revendication 7 ou 8, comprenant en outre :
un passage de milieu d'augmentation de température pour envoyer le milieu d'augmentation de température au dispositif d'augmentation de température (36) ;
un capteur d'humidité relative (46) pour détecter une humidité relative de l'air d'alimentation après échange thermique avec le milieu d'augmentation de température dans le dispositif d'augmentation de température (36) ;
une vanne de régulation de débit (48) disposée dans le passage de milieu d'augmentation de température ; et
une partie de commande (50) pour commander un degré d'ouverture de la vanne de régulation de débit (48) pour commander au moins l'une de la température de l'air d'alimentation ou de l'humidité relative de l'air d'alimentation à une valeur de consigne.

11. Dispositif de déshumidification (10A, 10D) selon la revendication 10,
dans lequel le passage de milieu d'augmentation de température est un passage d'air de régénération (40) pour envoyer au moins une partie de l'air de régénération refoulé de la chambre d'air de régénération (14) au dispositif d'augmentation de température (36) en tant que milieu d'augmentation de température.
